# EUROPEAN PATENT APPLICATION

(11) **EP 1 502 636 A1**
(43) Date of publication of application: **02.02.2005**
(21) Application number: 04014552.6
(22) Date of filing: 22.06.2004
(51) Int. Cl.: B01D 17/02

(54) **Filtering apparatus**

(30) Priority: 24.07.2003 GB 0317250
(71) Applicant: Timmins, John Andrew, Wolverhampton, West Midlands WV11 2DW (GB)
(72) Inventor: Timmins, John Andrew, Wolverhampton, West Midlands WV11 2DW (GB)
(74) Representative: Lucking, David John

(57) **Abstract**

A filtering apparatus includes first 11, second 22 and third 32 chambers, the first chamber 11 receiving a mixture of liquid and matter to be filtered, the second chamber 22 receiving the mixture be filtered from the first chamber 11 via a weir 20, and the third chamber 32 receiving liquid from each of the first and second chambers 11, 22, the first chamber 11 having an outlet 18 at a low position which is connected via a conduit 19 to the third chamber 32 and which opens into the third chamber at a first height, to discharge liquid into the third chamber 32 when the liquid level L1 in the first chamber exceeds the first height, and the second chamber 22 having an outlet 26 at a low position which is connected via a conduit 30 to the third chamber 32 and which opens into the third chamber 32 at a second height, to discharge liquid into the third chamber 32 when the liquid level L2 in the second chamber 22 exceeds the second height.

## Description

### Description of Invention

This invention relates to a filtering apparatus and more particularly to a filtering apparatus for filtering oil and/or other complex hydrocarbons, from a mixture including aqueous liquid. Such a mixture typically is produced by an air compressor machine, the aqueous liquid being condensate and the oil, entrained lubricant.

Filtering apparatus are known which include a settling tank. The less dense oil tends to float on the aqueous liquid, and is arranged to pass over a weir to a collection chamber. The liquid level is maintained in the settling tank, with aqueous liquid being drawn off from the tank e.g. via a low level outlet. Inevitably some of the liquid passes into the collection chamber, particularly where the liquid and oil are bound together e.g. in a mayonnaise consistency mixture. It is undesirable for liquid to pass into the collection chamber as this prematurely fills the collection chamber.

Another proposal of a filtering apparatus is disclosed in our previous international application WO-A-00/74809. In this arrangement, liquid/oil mixture may freely flow into a filtering chamber where there is provided a filter of oleophillic material, which floats on liquid maintained in the filtering chamber at a set level. Filtered liquid is removed from a low level outlet from the filtering chamber. As the filter becomes increasingly contaminated with oil, the filter sinks, so that fresh oleophillic material is continuously presented to filter the incoming mixture.

Thus in our prior proposal, liquid may more freely flow over the weir into the filtering chamber, as there is a flow path through the filtering chamber, through the filter, for the liquid.

It has been found that it is desirable to provide within the floating filter, a float, both to balance the descent of the float with the amount of oil filtered from the mixture, but also to resist the flowing liquid dragging the filter downwardly in the filtering chamber. The provision of such a float reduces the available volume for oleophillic material, and thus filtering efficiency is reduced.

According to a first aspect of the invention we provide a filtering apparatus according to claim 1.

Thus where the apparatus is for filtering from the mixture, matter which is less dense than the liquid in which it is contained, the matter will tend to float on the liquid in the first chamber. Matter will then tend to flow from the first chamber into the second chamber via the weir, whilst liquid from the low level outlet of the first chamber may pass into the third chamber. Thus by providing a filter in the second chamber, the matter which passes into the second chamber with a smaller volume of liquid via the weir, may be filtered from the mixture, whilst liquid from the low outlet of the first chamber which may not contain any significant amount of matter, may pass into the third chamber without filtering.

If desired a fine filter may be provided in the third chamber finely to filter the liquid discharged into the third tank after filtering in the second chamber, and from the low outlet of the first chamber, before the liquid is discharged from the apparatus e.g. into another chamber, or direct to the environment.

Thus in comparison with existing weir type filtering apparatus where it is desirable to minimise the volume of liquid passing over the weir, the flow of liquid over the weir in the apparatus of the present invention is not critical to the performance of the filtering apparatus, but because liquid containing no significant amount of matter may pass into the third chamber without passing through the filter, a large flow of liquid through the second chamber is avoided thus improving filtering efficiency.

Practically the first, second and third chambers may geometrically, be arranged in a row, although other arrangements are possible.

Where the matter is oil and the liquid is aqueous, the second chamber may include a filter which includes oleophillic material through which the mixture, or at least a substantial proportion of the mixture is constrained to pass.

The filter may be of the kind disclosed in our previous international patent application WO-A-00/74809 which floats on liquid in the second chamber, and which sinks as the mass of the filter increases as more matter is filtered from the mixture. Whereas in our previous proposal, such a filter generally requires a float to enable the filter to resist being dragged downwardly in the second chamber by high volumes of liquid flow, in accordance with the present invention, because there is a lesser flow of liquid through the second chamber, no, or at least a smaller float is required, thus maximising the space available for filtering material, thus prolonging the useful life of the filter.

According to a second aspect of the invention we provide a method of filtering according to claim 7.

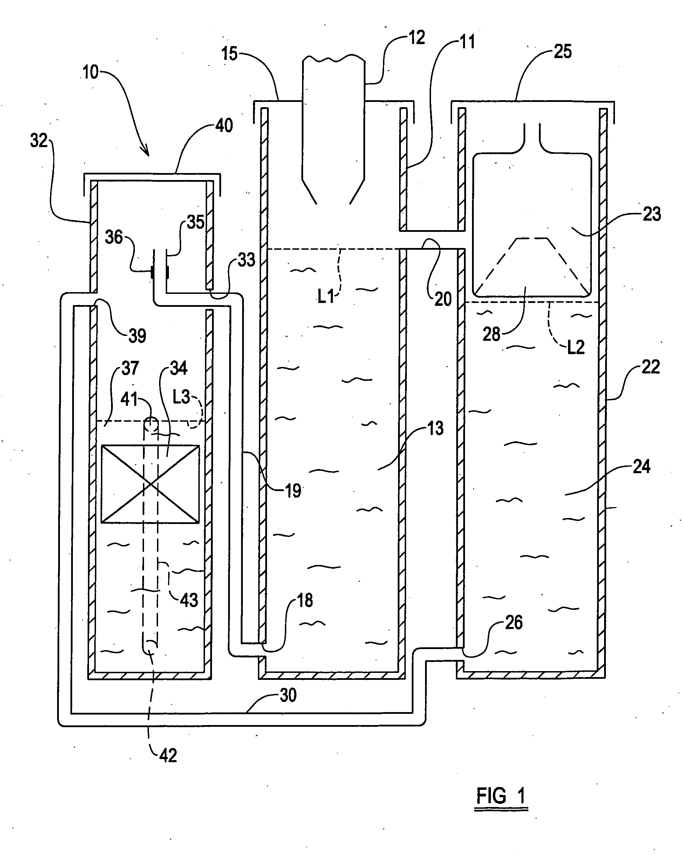

Embodiments of the invention will now be described with reference to the accompanying drawings in which:-
FIGURE 1 is an illustrative cross sectional view through an apparatus in accordance with the present invention;

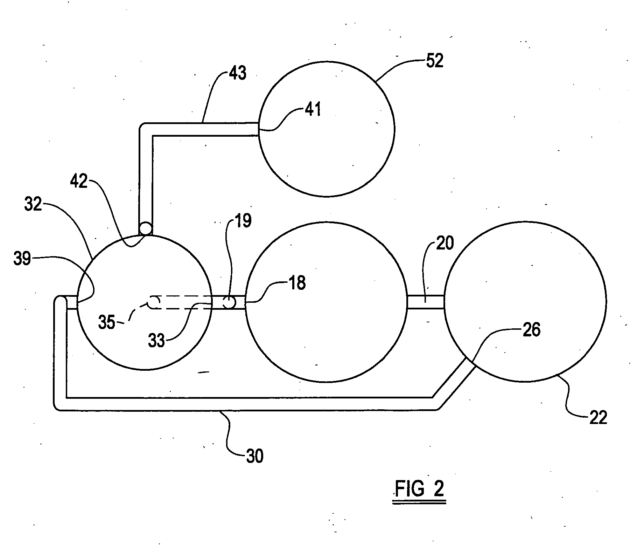

FIGURE 2 is a plan illustrative view of the apparatus of figure 1.

Referring to the drawings, a filtering apparatus 10 includes a first chamber 11 into which a mixture of liquid and matter is discharged from a nozzle 12. In the example, the liquid may be condensate from an air compressor machine, and the matter contained in the liquid may be entrained oil, lubricant, or other complex hydrocarbons.

The first chamber 11 contains mixture 13 thus discharged and in time, the oil etc. will tend to float on the surface of the liquid, and thus by arranging for the liquid level L1 in the first chamber 11 to be controlled to be at the level of a weir 20 from the first chamber 11 (as hereinafter described), a mixture of predominantly oil, but liquid too, will pass from the first chamber 11 to a second chamber 22 via the weir 20.

Within the second chamber 22 there is provided a floating filter 23 which in this example is a bag of oleophillic material which contains a small float 28. The filter 23 floats on liquid 24 in the second chamber 22, and the inflowing mixture is constrained to pass through the filter 23, so that oil, etc. in the mixture is retained by the oleophillic material.

The liquid 24 which passes through the filter 23 is retained in the second chamber 22, until the liquid 24 passes from the second chamber 22 via an outlet 26 at a low level in the second chamber 22. The liquid level L2 in the second chamber 22 is maintained as hereinafter described.

As the filter 23 adsorbs more and more oil, the filter 23 will slowly sink so that fresh oleophillic filter material is continuously presented adjacent the weir 20, or at least between the weir 20 and the liquid level L2 in the second chamber 22.

The float 28 is provided to balance the rate of descent of the filter 23 as the mass of the filter 23 increases as more oil is adsorbed.

The apparatus 10 includes a third chamber 32 into which liquid 13/24 may be discharged from the first and second chambers 11, 22.

The first chamber 11 has a low level outlet 18 at or adjacent a bottom of the chamber 11 in this example, which is connected to a conduit 19 which extends to the third chamber 32 through an opening 33 in a wall of the third chamber 32, to a discharge inlet 35 which is at a first height. In this example, the first height of the discharge inlet 35 is adjustable by means of a sliding connector 36. By raising or lowering the discharge outlet 35, the level L1 of the mixture in the first chamber 11 may thus be adjusted for optimum flow of floating matter over the weir 20 into the second chamber 22. Thus is useful to tune the apparatus 10 depending on the amount of oil in the mixture entering the first chamber 11.

At a low level in the second filter-containing chamber 22, an outlet 26 for the liquid 24 is provided, the outlet 26 being connected to a conduit 30 which extends upwardly to an inlet 39 of the third chamber 32, and through which inlet 39, liquid from the second chamber may thus be discharged into the third chamber 32, when the liquid level L2 in the second chamber 22 exceeds the second height, of the level of the inlet 39.

It can be seen that the first height of the discharge outlet 35 and of the mixture level L1 in the first chamber 11, is above second height of the inlet 39 to the third chamber 32 and of the liquid level L2 in the second chamber 22.

Thus liquid 13/24 from each of the first and second chamber 11, 22 is discharged into the third chamber 32 when the liquid level L1, L2 in the respective chamber 11, 22, exceeds the first/second height.. The amount of liquid in the mixture passing over the weir 20 into the second chamber 22 is not critical as the liquid flow through the filter 23 is reduced by liquid also passing to the third chamber 32 via the low level outlet 18 and conduit 19.

The liquid level L3 in the third chamber 32 is determined by the level of an inlet into a fourth chamber 52 in this example, the liquid passing from the third chamber 32 via a low level outlet 42 into a conduit 43 which extends upwardly and to an inlet 41 to the fourth chamber 52, at a third height the same as level L3 in the third chamber 32. The liquid may be discharged from the fourth chamber 52 to the environment, or into a tanker for disposal, for examples only, and of course in another example, the provision of a fourth chamber 52 may not be required. Rather the liquid may be discharged directly from the third chamber 32 into the environment, as required.

Within the third chamber 32 there is provided a fine, typically carbon, filter 34 to filter any matter from the liquid 13/24 not removed by the floating filter 23, or not separated from the liquid in the settling, first chamber 22.

Various modifications may be made without departing from the scope of the invention. For example, although it is preferred to provide a floating filter 23 including oleophillic material in the second chamber 22, another kind of filter, or indeed some other device for filtering matter from the mixture entering the second chamber 22 over the weir 20, may be provided.

The provision of a carbon filter 34 within the third chamber may not essential, where the mixture readily separates into aqueous and oil-like constituents in the first chamber 11, and where the second chamber 22 contains an efficient filter, such as the floating filter 23.

The chambers 11, 22, 32, (and 52 where provided), need not be of the geometry shown in the drawings, but may be of other configurations as required. For example in the example shown in the drawings, each of the chambers 11, 22, 32 is lidded 15, 25, 40 for access, but as the first chamber 11 at least need not be accessible, for example to any filter, as in the second and third chambers 22, 32, the first chamber 11 may have a closed top.

The runs for the conduits 19, 30 (and 43 where a fourth chamber 52 is provided) may be otherwise than shown; as is convenient for a particular installation.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A filtering apparatus including first (11), second (22) and third (32) chambers, the first chamber (11) in use receiving a mixture of liquid and matter to be filtered, the second chamber (22) in use receiving the mixture be filtered from the first chamber (11) via a weir (20), and the third chamber (32) in use receiving liquid from each of the first and second chambers (11, 22), the first chamber (11) having an outlet (18) at a low position which is connected via a conduit (19) to the third chamber (32) and which opens into the third chamber (32) at a first height, to discharge liquid into the third chamber (32) when the liquid level (L1) in the first chamber (11) exceeds the first height, and the second chamber (22) having an outlet (26) at a low position which is connected via a conduit (30) to the third chamber (32) and which opens into the third chamber (32) at a second height, to discharge liquid into the third chamber (32) when the liquid level (L2) in the second chamber (22) exceeds the second height.

2. An apparatus according to claim 1 **characterised in that** a filter (23) is provided in the second chamber (22) for filtering matter which passes into the second chamber (22) in the mixture.

3. An apparatus according to claim 1 or claim 2 **characterised in that** a fine filter (34) is provided in the third chamber (32) finely to filter the liquid discharged into the third chamber (32) after filtering in the second chamber, and from the low outlet of the first chamber, before the liquid is discharged from the apparatus.

4. An apparatus according to any one of the preceding claims **characterised in that** the first, second and third chambers (11, 22, 32) are geometrically, arranged in a row.

5. An apparatus according to any one ofthe preceding claims **characterised in that** the second chamber (22) includes a filter (23) which includes oleophillic material through which the mixture, or at least a substantial proportion of the mixture, is constrained to pass.

6. An apparatus according to claim 5 **characterised in that** the filter (23) floats on liquid in the second chamber (22), and sinks as the mass of the filter (23) increases as more matter is filtered from the mixture.

7. A method of filtering utilising a filtering apparatus (10) including first, second and third chambers (11, 22, 32), the first chamber (11) receiving a mixture of liquid and matter to be filtered, the second chamber (22) receiving the mixture be filtered from the first chamber (11) via a weir (20), and the third chamber (32) receiving liquid from each of the first (11) and second (22) chambers, the first chamber (11) having an outlet (18) at a low position which is connected via a conduit (19) to the third chamber (32) and which opens into the third chamber (32) at a first height, to discharge liquid into the third chamber (32) when the liquid level (L1) in the first chamber (11) exceeds the first height, and the second chamber (22) having an outlet (26) at a low position which is connected via a conduit (30) to the third chamber (32) and which opens into the third chamber (32) at a second height, to discharge liquid into the third chamber (32) when the liquid level (L2) in the second chamber (22) exceeds the second height, the method including controlling the liquid level in the second chamber (22) by adjusting the first height of the conduit (30) from the low level outlet (26) of the second chamber (22), at or in the third chamber (32).
